# EUROPÄISCHE PATENTSCHRIFT

(11) **EP 0 830 585 B1**
(45) Veröffentlichungstag und Bekanntmachung des Hinweises auf die Patenterteilung: **31.03.2004**
(21) Anmeldenummer: 96918648.5
(22) Anmeldetag: 30.05.1996
(51) Int. Cl.: G01N 21/35, B01L 3/00

(54) **PROBENTRÄGER FÜR DIE INFRAROT-TRANSMISSIONSSPEKTROSKOPIE**
SAMPLE CARRIER FOR USE IN INFRARED TRANSMISSION SPECTROSCOPY
PORTE-ECHANTILLON POUR SPECTROSCOPIE PAR TRANSMISSION INFRAROUGE

(30) Priorität: 03.06.1995 DE 19520446
(43) Veröffentlichungstag der Anmeldung: 25.03.1998
(73) Patentinhaber: Roche Diagnostics GmbH, 68298 Mannheim (DE)
(72) Erfinder: HAAR, Hans-Peter, D-69168 Wiesloch (DE); WERNER, Gerhard, D-69469 Weinheim (DE)
(86) Internationale Anmeldenummer: PCT/EP1996/002321
(87) Internationale Veröffentlichungsnummer: WO 1996/039620

(56) Entgegenhaltungen:
- WO-A-93/00580
- DE-C- 4 030 699

## Beschreibung

Die Erfindung betrifft Probenträger für die Infrarot-Transmissionsspektroskopie, die eine Probenaufgabezone sowie einen Halter zur Halterung der Probenaufgabezone besitzen und bei denen die Probenaufgabezone eine Schichtdicke besitzt, die kleiner ist als 1000 nm.

Zur Erfindung gehört weiterhin die Verwendung der Probenträger für eine quantitative Infrarot-Transmissionsspektroskopie sowie ein Verfahren und ein System zur Durchführung einer Transmissionsspektroskopie mit den genannten Probenträgern. Eine weitere Ausführungsform betrifft Probenträger zur IR-Transmissionsspektroskopie, die mindestens zwei Probenaufgabezonen auf einem gemeinsamen Halter besitzen und die mindestens zwei Probenaufgabezonen aus Materialien bestehen, die keine gemeinsamen Absorptionsbanden mit einer Absorbance größer als 0,1 im verwendeten Infrarotbereich besitzen.

Im Stand der Technik sind Probenträger für die Infrarotspektroskopie bekannt, die die Gestatt einer planparallelen Platte aus für Infrarotstrahlung weitestgehend durchlässigen Materialien besitzen. Die deutsche Patentschrift DE 4030699 beschreibt derartige Probenträger als Stand der Technik und schlägt eine Verbesserung dieser Probenträger vor, bei der der Probenträger als Sammellinse ausgebildet wird. Als Probenträgermaterialien werden im Stand der Technik Kaliumbromid, Zinkselenid, Natriumchlorid und andere für Infrarotstrahlung durchlässige Materialien offenbart. Die im Stand der Technik verwendeten Materialien besitzen eine Dicke von mehreren Millimetern, um eine ausreichende mechanische Stabilität sicherzustellen.

Weiterhin sind im Stand der Technik Infrarot-Probenträger der Firma 3M bekannt, die die Bezeichnung "Disposable IR Card" tragen. Diese Probentrager bestehen aus einem Kartonstreifen mit einer Öffnung. Die Öffnung im Karton ist durch eine Probenaufgabezone, wahlweise aus Polyethylen oder PTFE, verschlossen. Die 3M Probenträger besitzen den Nachteil, daß aufgrund der Absorptionsbanden von Polyethylen und PTFE Absorptionen des zu untersuchenden Probenmaterials überdeckt werden können. Insbesondere weist jedes der Materialien für die Probenaufgabezone relativ starke Banden auf, so daß diese Banden auch durch eine Differenzmessung in der Regel nicht eliminiert werden können. Daher ist mit solchen Probenträgern eine quantitative Analyse in der Regel nicht möglich. In dem Dokument WO 93/00580 wird ein mikroporöser Probenträger für die IR-Spektroskopie beschrieben, der eine semiquantitative Analyse der Probe erlaubt.

Aufgabe der vorliegenden Erfindung war es, leicht handhabbare Probenträger vorzuschlagen, die aufgrund ihrer Eigenschaften im Infrarotbereich eine quantitative Infrarotspektroskopie ermöglichen. Die Aufgabe wird gelöst durch die erfindungsgemäßen Probenträger, die einen Halter zur Halterung einer Probenaufgabezone und eine Probenaufgabezone besitzen, deren Schichtdicke kleiner ist als der vierte Teil der kürzesten Wellenlänge der verwendeten Strahlung im Probenmaterial. Im Rahmen der Entwicklung geeigneter Probenträger wurde zunächst versucht, die im Stand der Technik bekannten Probenträger durch Verringerung der Schichtdicke zu verbessern. Experimente mit Probenträgern einer Schichtdicke im Bereich von 20 µm konnten keine überzeugenden experimentellen Ergebnisse erbringen. Eine quantitative Reproduktion von Spektren, die auf Halbleitermaterialien dieser Schichtdicke aufgenommen wurden, war nicht möglich. Es hat sich gezeigt, daß Interferenzerscheinungen auftreten, die stark von der Dicke des Materials abhängig sind, so daß bereits relativ geringe produktionsbedingte Dickenschwankungen in der Probenaufgabezone zu Intensitätsfluktuationen führen. Weiterhin treten im Dickenbereich von mehreren Mikrometern wellenlängenabhängige Intensitätsschwankungen auf, die das Spektrum der Probe überlagern und so eine quantitative Auswertung stark erschweren, wenn nicht gar unmöglich machen. Erst in dem Dickenbereich unter 1000 nm konnten überraschenderweise quantitativ reproduzierbare Spektren aufgenommen werden. Es hat sich gezeigt, daß die Probenaufgabezone eine Schichtdicke besitzen sollte, die kleiner ist als der vierte Teil der Wellenlänge der kürzesten Meßwellenlänge im Material der Probenaufgabezone beträgt. Aufgrund der bekannten Abhängigkeit der Wellenlänge vom Berechnungsindex des Materials, in dem sich die Welle fortpflanzt, ist die obere Dickengrenze der Probenaufgabezone abhängig von ihrem Material. Ein Vorteil erfindungsgemäßer Probenträger liegt darin, daß die Absorption der Probenaufgabezone gering ist und die Probenspektren daher nicht nennenswert beeinflußt werden. Mit erfindungsgemäßen Probenträgern werden auch störende Interferenzerscheinungen vermieden. Hinzu kommt die im Vergleich zur KBr-Preßtechnik oder zur Technik mit NaCl-Platten einfache Handhabbarkeit der Probenträger. Erfindungsgemäße Probenträger besitzen ferner den Vorteil geringer Herstellungskosten, so daß sie als Artikel zur Einmalverwendung geeignet sind. Mit Probenträgem zur Einmalverwendung entfallen auch Verschleppungs- und Kontaminationsprobleme.

Infrarotspektrometer zur Durchführung von IR-Transmissionsmessungen sind im Stand der Technik hinlänglich bekannt. Zur Durchführung von Messungen mit den erfindungsgemäßen Probenträgern ist beispielsweise das Fourier-Transform-Spektrometer IFS 25 von Bruker geeignet. Die erfindungsgemäßen Probenträger können sowohl in Fourier-Transform als auch in Dispersionsspektrometern eingesetzt werden. Die Probenträger werden hierzu in einen Halter des Infrarotspektrometers eingebracht und mit Infrarotstrahlung durchstrahlt.

Bei einer ersten Ausführungsform eines erfindungsgemäßen Probenträgers besitzt der Probenträger einen Halter sowie eine Probenaufgabezone mit einer Dicke, die kleiner ist als 1000 nm. Zur Durchführung einer Vielzahl von Analysen kann der Probenträger auch eine Mehrzahl von Probenaufgabezonen besitzen.

Der Halter des Probenträgers besitzt in der Regel die Form einer dünnen Platte, die aus einem Material geeigneter Steifigkeit gefertigt ist. Geeignete Materialien sind beispielsweise Kunststoffe, Kartons, Metalle und Glas. In dem Halter befinden sich ein oder mehrere Öffnungen, in denen oder auf deren Rändern die Probenaufgabezone befestigt ist. Der Halter weist weiterhin einen Bereich auf, der zur manuellen oder automatischen Handhabung des Probenträgers dient. Weiterhin kann der Halter Elemente, wie Einkerbungen, Ausnehmungen, Materialvorsprünge und dergleichen aufweisen, die eine Positionierung des Probenträgers im Infrarotspektrometer ermöglichen. Zum Transport des Probenträgers im Infrarotspektrometer können auf dem Halter geeignete Vorrichtungen, wie Zahnstangen, aufgerauhte Bereiche und dergleichen, vorgesehen sein.

Die Probenaufgabezone ist auf dem Halter oder in der Ausnehmung des Halters so befestigt, daß die Ausnehmung des Halters durch die Probenaufgabezone verschlossen wird. Die Probenaufgabezone besitzt die Form einer dünnen Platte oder Folie aus einem für Infrarotstrahlung durchlässigen Material. Geeignete Materialien sind vorzugsweise Silicium, Germanium, Diamant. Allgemein haben sich Materialien als vorteilhaft erwiesen, die eine kontinuierliche und möglichst geringe Absorption im Infrarotbereich aufweisen. Solche Materialien sind insbesondere unter den Halbleitermaterialien zu finden. Der Begriff "Halbleitermaterial" soll hierbei nicht nur einzelne chemische Elemente, sondern auch zusamrnengesetzte Halbleiter, wie beispielsweise binäre und ternare Halbleiter umfassen. Als vorteilhaft hat es sich weiterhin erwiesen, wenn die Halbleitermaterialien eine große Bandlücke aufweisen und keine Verunreinigungen oder Dotierungen enthalten. Bei den erfindungsgemäßen extrem kleinen Schichtdicken der Probenaufgabezone können auch Materialien verwendet werden, die im Infrarotbereich Absorptionsbanden aufweisen, deren Absorbance (Absorptivität) jedoch nicht zu hoch sein darf. Erfindungsgemäß sind daher auch Kunststoffolien aus Polyestern, Polystyrolen, Polyethylen, Polypropylen usw. geeignet. Als besonders geeignet für die erfindungsgemäße Verwendung hat sich ein Polyester mit der Bezeichnung Mylar® der Firma DuPont erwiesen. Sehr dünne und gleichmäßig dicke Kunststoffolien können z. B. durch einen Reckprozeß während der Herstellung erzielt werden.

Die Dicke der Probenaufgabezone ist kleiner als 1000 nm, oder noch besser, kleiner als 500 nm. In Experimenten hat sich gezeigt, daß die Dicke der Probenaufgabezone kleiner als der vierte Teil der kürzesten Wellenlänge, die zur Messung verwendet wird, sein muß, um quantitativ reproduzierbare Spektren zu erzielen. Der Bereich des mittleren Infrarotlichtes liegt zwischen 2,5 und 25 µm (4000 bis 400 cm⁻¹). Geeignete Dicken der Probenaufgabezone zur Messung in diesem Infrarotbereich sollten daher eine Schichtdicke kleiner als 500 nm aufweisen. Für den Nachweis und die quantitative Bestimmung vieler Analyten ist jedoch insbesondere der Infrarotbereich zwischen 7 und 13 µm Wellenlänge interessant. Für diesen Bereich sind daher Probenaufgabezonen einer Dicke unterhalb 1 µm geeignet.

Aufgrund der extrem dünnen Materialien für die Probenaufgabezone sollte die Größe der Öffnung(en) im Halter des Probenträgers nicht zu groß gewählt werden, um eine ausreichende Stabilität der Probenaufgabenzone zu gewährleisten. Jede der Öffnungen im Halter sollte einen Öffnungsquerschnitt aufweisen, der unterhalb 10 mm, bevorzugt unterhalb 5 mm liegt. Zur Gewährleistung der Stabilität der Probenaufgabenzone hat es sich als vorteilhaft erwiesen, wenn die Öffnungen im Halter kreisförmig sind.

Die Befestigung der Probenaufgabezone am Halter kann erfolgen, indem die Probenaufgabezone auf den Halter aufgeklebt, aufgeschmolzen oder aufgepreßt wird. Es hat sich gezeigt, daß in vielen Fällen bereits auch die Adhäsion der dünnen Folien am Halter ausreichend zur Halterung ist. Die Befestigung kann auf dem Halter selbst erfolgen, so daß die Ausnehmung des Halters von der Folie verschlossen wird und die Folie auf dem Halter aufliegt. Bei einer weiteren Ausführungsform ist die Probenaufgabezone im Inneren der Ausnehmung des Halters befestigt. Weiterhin sind auch einteilige Ausführungsformen der Probenträger gut geeignet, die beispielsweise im Spritzgußverfahren aus Kunststoffen hergestellt werden können.

Analog zu den Probenträgem der Firma 3M sind erfindungsgemäß auch solche Probenträger möglich, bei denen der Halter zwei Schichten mit jeweils mindestens einer Öffnung besitzt, zwischen denen sich die Probenaufgabezone befindet, die dort durch Verkleben, Verpressen etc. der Schichten so gehaltert wird, daß sie durch Öffnungen in den Schichten zugänglich ist.

Bei Verwendung von Halbleitermaterialien für die Probenaufgabezone können die bereits genannten Methoden zur Verbindung von Halter und Probenaufgabezone verwendet werden. Zusätzlich ist jedoch ein Herstellungsverfahren möglich, bei dem eine Platte eines Halbleitermaterials einem Ätzprozeß unterworfen wird, so daß die Dicke der Platte in einem Bereich, der nach der Ätzung die Probenaufgabezone bildet, auf eine Dicke mit weniger als 1000 nm reduziert wird. Durch diesen Prozeß wird eine einteilige Ausführungsform des Probenträgers erhalten. Vorteilhaft ist es auch möglich, eine Halbleiterplatte relativ geringer Dicke dem genannten Ätzprozeß zu unterziehen, um eine Platte zu erhalten, die eine Zone aufweist, deren Dicke kleiner als 1000 nm ist. Vorteilhaft kann die erhaltene Platte auf einen Halter aufgebracht werden. Auf diese Weise ist es möglich, mit einer relativ geringen Menge an Halbleitermaterial einen erfindungsgemäßen Träger herzustellen. Für die Herstellung von Probenträgem aus Halbleitermaterialien sei hiermit vollinhaltlich auf die in WO 95/01559 ausgeführten Verfahren (Seiten 6 und 7) Bezug genommen.

Alternativ ist es möglich, die für die Erfindung notwendige Probenaufgabezone mit einer Dicke kleiner als 1000 nm durch Sputtern, CVD (chemical vapour deposition) oder Molekularstrahlepitaxie zu erzielen.

Bezüglich der Herstellung eines Filmes aus Diamant sei hiermit vollinhaltlich auf "Optical characterization of diamond synthesized using CH₄-CO₂ gas mixtures without supplying hydrogen gas" in Thin Solid Films 253 (1994), Seiten 162-167 Bezug genommen. Beispielhaft sei für einen Sputter-Prozeß das folgende Verfahren genannt:

Auf eine dünne Glasplatte wird eine Kunststoffschicht von wenigen Millimetern Dicke aufgebracht. In einem nächsten Schritt wird aus der Kunststoffschicht eine Ausnehmung mit einem Querschnitt von einigen Millimetern herausgeschnitten. Die Öffnung in der Kunststoffschicht wird durch einen Sputterprozeß mit einer Siliciumschicht kleiner als 1000 nm aufgefüllt, so daß sie die Öffnung vollständig verschließt. In einem letzten Herstellungsschritt wird die Glasplatte, die als Träger gedient hat, durch einen Ätzprozeß mit Flußsäure entfernt.

Bei einer zweiten Ausführungsform von erfindungsgemäßen Probenträgern besitzen diese mindestens zwei Probenaufgabezonen, die auf einem gemeinsamen Halter befestigt sind. Bei dieser Ausführungsform ist die Dicke der Probenaufgabezonen weit weniger kritisch als bei der bereits beschriebenen ersten Ausführungsform. Es sind Probenaufgabezonen im Bereich von mehreren Mikrometern bis hin zu einem Millimeter möglich. Ein wesentliches Element der zweiten Ausführungsform von Probenträgern ist es, daß die mindestens 2 Probenaufgabezonen aus Materialien bestehen, die im Infrarotbereich von 7 bis 13 µm keine gemeinsamen Absorptionsbanden mit einer Absorbance größer 0,1 aufweisen. Geeignete Kombinationen von Materialien für Probenaufgabezonen, die diese Bedingung erfüllen, sind z. B. Polyethylen und PTFE sowie Silizium und Germanium.

Allgemein können geeignete Kombinationen von Kunststoffen gefunden werden, indem ein erster Kunststoff gewählt wird, der wenige und scharf begrenzte Absorptionsbanden aufweist (z. B. Polyester, Polyvinylchlorid, Polymethylmethacrylat, Polyethylen und Polystyrol). Als zweites Material der Kombination wird ein Kunststoff gewählt, der dem ersten in der Konstitution gleicht, bei dem Wasserstoffatome jedoch durch Deuterium ersetzt sind.

Bei der zweiten Ausführungsform von Probenträgern werden mindestens zwei Spektren für die gleiche Probenflüssigkeit aufgenommen. Aufgrund der erfindungsemäß geforderten Bedingung, daß die Materialien der Probenaufgabezonen keine gemeinsamen Absorptionsbanden aufweisen, können die Informationen aus den mindestens zwei aufgenommenen Spektren so zusammengeführt werden, daß die Spektren des Probenmaterials im verwendeten Infrarotbereich nicht durch Absorptionsbanden der Probenaufgabezonen überdeckt werden. Es hat sich herausgestellt, daß die Bedingungen zur Aufnahme eines quantitativen Transmissionsspektrums dann gegeben sind, wenn die Absoprtionsbanden der Probenaufgabezonen im Infrarotbereich von 7 bis 13 µm eine Absorbance aufweisen, die kleiner als 1, bevorzugt kleiner als 0,3 ist. Die Begriffe "Absorbance" und "Absorptivität" werden alternativ verwendet, sie sind durch den dekadischen Logarithmus des Quotienten aus einfallender und hindurchgelassener Intensität definiert.

Die zweite Ausführungsform von Probenträgern kann so gestaltet werden, daß der Halter mindestens 2 voneinander getrennte Ausnehmungen besitzt, in denen sich Probenaufgabezonen befinden. Für die Probenaufgabezonen werden mindestens zwei verschiedene Typen von Materialien mit den bereits genannten Eigenschaften gewählt. Falls mit zwei Materialien das erfindungsgemäß erforderliche Kriterium, daß keine sich überlappenden Absorptionsbanden vorliegen, nicht gewährleistet werden kann, so können weitere Probenaufgabezonen mit zusätzlichen Materialien herangezogen werden.

Bei einer bevorzugten Ausführungsform wird für die Probenaufgabezonen eine Folie (gegebenenfalls auch Platte) gewählt, bei der mindestens 2 unterschiedliche Materialien aneinander grenzen. Derartige Probenaufgabezonen sind insbesondere aus Kunststoffen in geeigneter Weise herstellbar, indem zwei Bahnen unterschiedlicher Kunststoffe miteinander verschmolzen werden.

Sowohl Probenträger der ersten als auch der zweiten Ausführungsform werden bevorzugt als Produkte zur einmaligen Verwendung hergestellt.

Mit Probenträgern gemäß der zweiten Ausführungsfom werden zur Untersuchung einer Probe zwei Messungen durchgeführt. Hierfür werden auf die mindestens zwei Probenaufgabezonen kleine Mengen ein und derselben Probe aufgebracht. Daraufhin erfolgt jeweils die Aufnahme eines Infrarotspektrums. Die zwei erhaltenen Infrarotspektren werden mit einer Auswerteeinheit, beispielsweise einem Computer, so zusammengeführt, daß ein Spektrum der Probesubstanz erhalten wird, das nicht durch Absorptionsbanden von Materialien der Probenaufgabezonen überlagert ist. Die Auswahl, welche Wellenlängenbereiche der erfolgten Messungen jeweils verwendet werden, kann erfolgen, indem vor Aufgabe der Proben auf die Probenaufgabezonen die Spektren der Probenaufgabezonen ermittelt werden. Durch die Auswerteeinheit wird gespeichert, in welchen Bereichen Absorptionsbanden durch Materialien der Probenaufgabezonen vorliegen. Diese Bereiche werden später bei der Erstellung eines kombinierten Spektrums aus den einzelnen aufgenommenen Spektren nicht berücksichtigt. Liegen Bereiche vor, in denen beide Probenaufgabezonen keine Absorptionsbanden aufweisen, so können diese Bereiche verwendet werden, um die Spektren aneinander anzugleichen, d. h. Basislinienkorrekturen und Skalierungen der erhaltenen Spektren vorzunehmen. Weiterhin sind diese Bereiche vorteilhaft, um die relativen Mengen an Probe auf den zwei Materialien der Probenaufgabezonen zu ermitteln. Dies ist insbesondere wichtig, wenn die Probe mit einem einzelnen Pipettierschritt auf den Bereich gegeben wird, bei dem die zwei aneinandergrenzenden Materialien der Probenaufgabezone beide mit Probe benetzt werden.

Die erfindungsgemäßen Probenträger können auch zur Erzeugung von qualitativen Infrarotspektren herangezogen werden, sie sind jedoch insbesondere vorteilhaft zur quantitativen Infrarotspektroskopie. Für eine quantitative Infrarotspektroskopie zur Ermittlung der Konzentration eines Analyten in der Probe ist es erforderlich, daß definierte Mengen an Probe auf die Probenaufgabezonen aufgebracht werden. Vorzugsweise werden bei Verwendung eines Probentragers der zweiten Ausführungsform auf die mindestens zwei Probenaufgabezonen gleiche Mengen an Probesubstanz aufgebracht. Eine zweifache Dosierung kann vermieden werden, wenn ein Probenträger verwendet wird, bei dem die mindestens zwei Probenaufgabezonen direkt aneinander grenzen. In diesem Fall erfolgt die Dosierung der Probe bevorzugt so, daß gleiche Probemengen auf jede der zwei Zonen der Probenaufgabezone gelangen. Kann dies nicht gewährleistet werden, so können Spektralbereiche, die mit beiden Zonen vermessen werden, herangezogen werden, um die Mengenverteilung auf den Zonen zu bestimmen.

Neben der bereits geschilderten Ausführungsform des Verfahrens zur Infrarotspektroskopie, bei dem Leerspektren der Probenaufgabezonen aufgenommen werden, ist es auch möglich, die Informationen über die Materialien der Probenaufgabezonen in der Auswerteeinheit abzuspeichern oder diese Informationen einzulesen, vorzugsweise direkt von einem Strichcode auf dem Probenträger. Die Auswerteeinheit kann in diesem Fall ohne Aufnahme von Leerspektren eine Auswahl der Bereiche, die jeweils zur Auswertung herangezogen werden, vornehmen.

Die Spektren der Probenaufgabezonen ohne Probe können verwendet werden, um die aktuellen Eigenschaften, d. h. insbesondere die Dicke der jeweiligen Probenaufgabezone zu bestimmen, da diese Parameter herstellungsbedingt schwanken können. Bei Kenntnis des Materials der Probenaufgabezone kann aufgrund der Absorptionsbanden auf die Dicke der Probenaufgabezone rückgeschlossen werden. Diese Daten können zur Korrektur von Probespektren verwendet werden, um beispielsweise die Absorption der Probenaufgabezonen zu berücksichtigen und gegebenenfalls von den mit Probe erhaltenen Spektren zu substrahieren.

Nachstehend wird ein Verfahren zur Durchführung einer quantitativen Transmissionsspektroskopie mit Probentragern der ersten oder zweiten Ausführungsform beschrieben.

Eine definierte Menge einer Probe wird auf die Probenaufgabezone des Probenträgers aufgebracht. Unter dem Begriff Probe werden im Rahmen dieser Erfindung insbesondere Flüssigkeiten verstanden. Klinisch relevante Probeflüssigkeiten sind beispielsweise Blut, Serum, Hämolysat, Urin, Speichel, Tränenflüssigkeit und dergleichen. Die Erfindung kann jedoch auch für Probeflüssigkeiten, die beispielsweise aus einem Flüssigchromatographen stammen, verwendet werden. Die Dosierung der Probemengen kann mit im Stand der Technik bekannten Mitteln, wie beispielsweise Mikropipetten, erfolgen. Zur Durchführung einer Spektroskopie mit erfindungsgemäßen Probenträgern werden in der Regel Probenmengen im Bereich weniger Mikroliter verwendet.

Zur Messung wird der Probenträger in ein Infrarotspektrometer eingebracht, wobei er über einen Halter so positioniert wird, daß die Probe vom Infrarotstrahl des Instrumentes erfaßt wird. Das Infrarotspektrometer kann weiterhin mit einem Strichcodeleser, einem Magnetstreifenleser oder einer andersartigen Datenerfassungsvorrichtung ausgestattet sein, die Daten betreffend den Probenträger und ggf. Informationen für die Spektralanalyse einliest.

Für den Fall, daß der Probenträger mehrere Probenaufgabezonen besitzt, beispielsweise zur Auswertung einer Vielzahl unterschiedlicher Proben oder falls ein Probenträger der zweiten Ausführungsform verwendet wird, ist es vorteilhaft, wenn das Infrarotspektrometer weiterhin mit einer Transportvorrichtung ausgestattet ist, die es ermöglicht, den Probentrager im Spektrometer so zu positionieren, daß der raumfeste Meßstrahl nacheinander jede der Probenaufgabezonen erfaßt.

Befindet sich eine Probenaufgabezone im Bereich des Meßstrahles, so wird sie von Infrarotstrahlung erfaßt. Bevorzugt wird die Messung so durchgeführt, daß die gesamte Probe integral vermessen wird, d. h., daß sich die gesamte Probenmenge im Meßstrahl befindet. In diesem Fall kann eine quantitative Messung auch dann vorgenommen werden, wenn die Probe nicht gleichförmig auf der Probenaufgabezone verteilt ist.

Aufgrund des Transmissionsspektrums der Probe wird die in der Probe enthaltene Menge eines oder mehrerer Analyten ermittelt. Die quantitative Auswertung von Infrarotspektren gehört zum Stand der Technik und wird daher an dieser Stelle nicht näher erläutert. Für Auswerteverfahren von Spektren sei hiermit auf die Literaturstelle "Applied Spectroscopy, Band 47, Seiten 1519 bis 1521 (1993)" und für die Durchführung einer quantitativen Spektroskopie auf die Patentanmeldung EP-A-0 644 413 Bezug genommen.

Unter Analyten sollen im Rahmen dieser Erfindung alle Stoffe verstanden werden, die im Infrarotbereich Strahlung absorbieren und deren Charakterisierung aufgrund dieser Strahlung möglich ist. Insbesondere sollen die in der klinischen Chemie interessanten Analyten, wie beispielsweise Glukose, Proteine, Hormone, Glyceride, Lipide, Enzyme, Pharmaka, Drogen usw. eingeschlossen sein.

Zur Durchführung einer quantitativen IR-Transmissionsspektroskopie hat es sich als vorteilhaft herausgestellt, wenn flüssige Proben vor Durchführung der Spektroskopie eingetrocknet werden.

Die erfindungsgemäßen Probenträger werden anhand der folgenden Figuren naher erläutert:
- Figur 1:: Probenträger mit einer Probenaufgabezone.
- Figur 2:: Probenträger mit 2 Probenaufgabezonen aus unterschiedlichen Materialien.
- Figur 3:: IR-Transmissionsspektrum eines Mylar®-Filmes.
- Figur 4:: IR-Transmissionsspektren von Siliziumfolien
- Figur 5:: IR-Transmissionsspektrum von RSA in physiologischer Kochsalzlösung
- Figur 6:: IR-Transmissionsspektrum eines 400 nm Mylar®-Filmes
- Figur 7:: Quantitative Glukosebestimmung auf einem 400 nm Mylar®-Filme

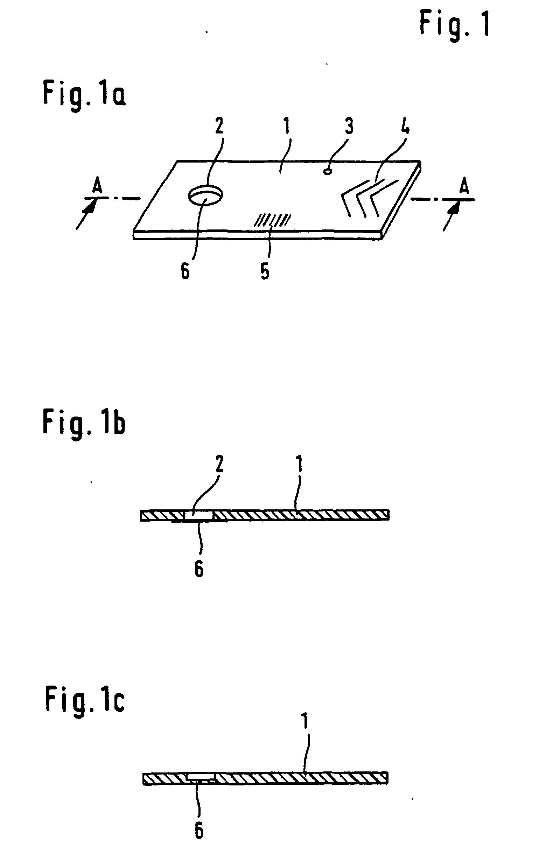

Figur 1a zeigt einen erfindungsgemäßen Probenträger in perspektivischer Ansicht. Der Probenträger besitzt einen Halter (1), in dem sich eine Öffnung (2) mit einem Durchmesser von 5 mm befindet. Der Halter (1) besitzt weiterhin eine Ausnehmung (3), die zur Positionierung des Probentrager mit einer Lichtschranke dient. Der Halter besitzt ferner eine Riffelung (4), die zur Verbesserung der manuellen Handhabbarkeit dient sowie einen Strichcode (5), der Informationen über den Probenträger enthält. Diese Informationen können beispielsweise das Material der Probenaufgabezone sowie deren Dicke betreffen.

Figur 1b zeigt den in Figur 1a dargestellten Probenträger entlang der Schnittlinie A-A. Die Ausnehmung (2) im Halter (1) ist durch die Probenaufgabezone (6) verschlossen. Im dargestellten Fall besteht der Halter aus einer Polystyrolplatte mit 2 mm Dicke, einer Länge von 5 cm und einer Breite von 2 cm. Die Ausnehmung (2) ist kreisförmig und besitzt einen Querschnitt von 5 mm. Als Probenaufgabezone wurde eine 400 nm dicke Folie aus dem Material Mylar® verwendet. Der Halter (1) und die Probenaufgabezone (6) wurden durch Ultraschallverschweißung miteinander verbunden.

Figur 1 c zeigt eine einteilige Ausführungsform eines erfindungsgemäßen Probenträgers im Querschnitt. Der Probenträger besitzt einen Halter (1) aus Polymethylmethacrylat, der eine Probenaufgabezone mit 500 nm Dicke besitzt. Der Probenträger kann durch einen Spritzgußprozeß hergestellt werden.

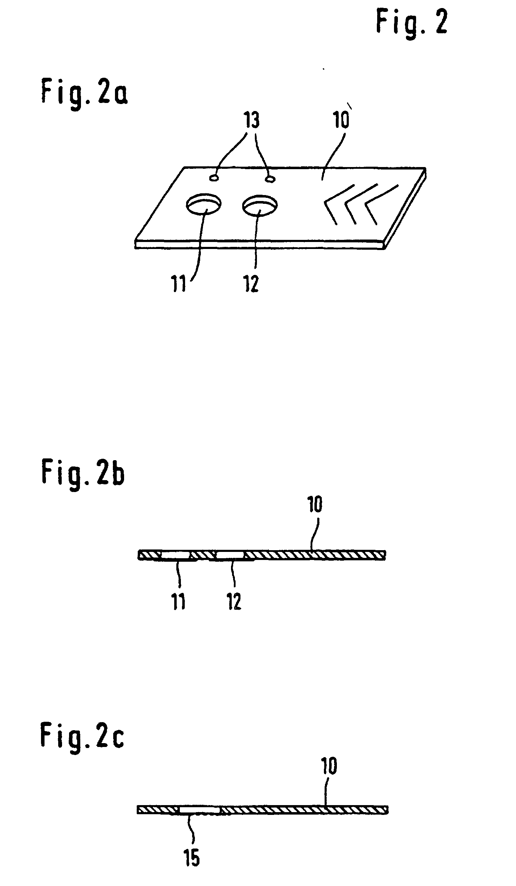

Figur 2a zeigt einen Probenträger mit einem Halter (10), in dem sich zwei Ausnehmungen für Probenaufgabezonen befinden. Die Ausnehmungen sind kreisförmig und besitzen einen lichten Querschnitt von 5 mm. Die erste der Öffnungen ist durch eine Probenaufgabezone (11) aus Polyethylen verschlossen, während die zweite Ausnehmung durch eine zweite Probenaufgabezone (12) aus deuteriertem Polyethylen verschlossen ist. Neben den bereits erwähnten Öffnungen im Halter befinden sich kleinere Ausnehmungen (13), die zur Positionierung des Probenträgers im Spektrometer über Lichtschranken dienen.

In Figur 2b ist der in Figur 2a dargestellte Probenträger im Querschnitt abgebildet.

Figur 2c zeigt einen Querschnitt durch einen Probentrager, bei dem in einer einzelnen Öffnung eine Kunststoffolie angebracht ist, die aus zwei aneinander angrenzenden Kunststoffen besteht.

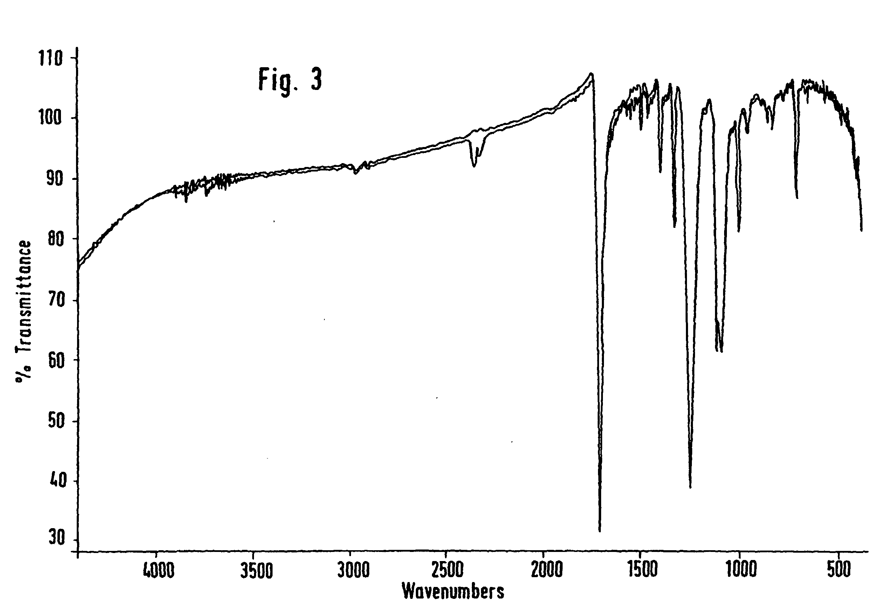

Figur 3 zeigt ein Transmissionsspektrum einer 400 nm dicken Folie aus dem Kunststoff Mylar®. Das Spektrum zeigt, daß der Kunststoff besonders gut als Trägermaterial geeignet ist, da er bei Wellenzahlen oberhalb von 1800 cm⁻¹ bis hin zu 4000 cm⁻¹ kaum Absorptionsbanden aufweist.

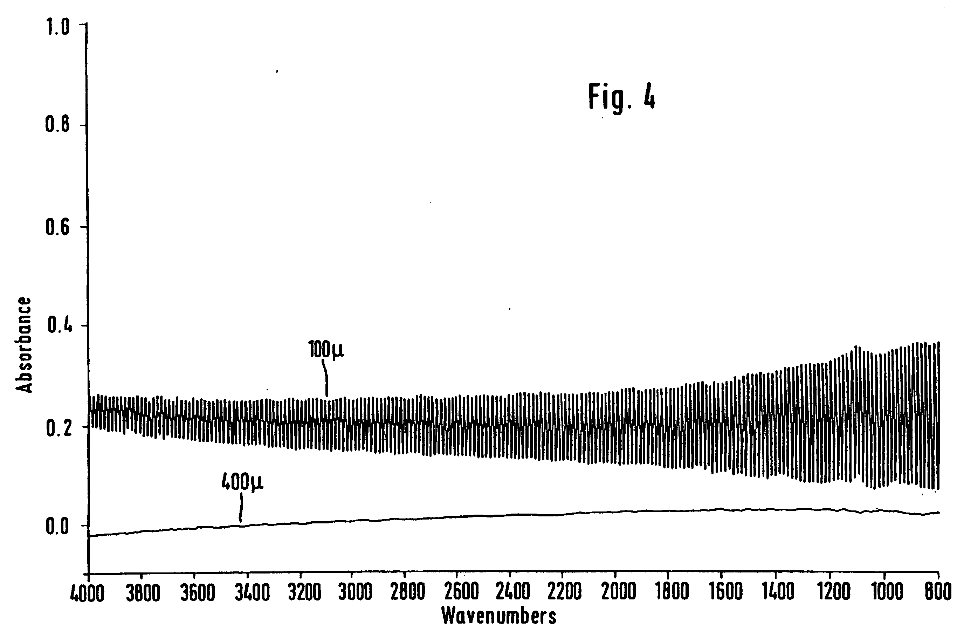

Figur 4 zeigt Transmissionsspektren von unterschiedlich dicken Siliziumfolien. Zur Aufnahme dieser Spektren wurde das Spektrometer so kalibriert, daß für eine Siliziumfolie von 400 µm keine Absorption angezeigt wird. Eine Siliziumfolie dieser Dicke weist eine Strahlungsabsorption von ca. 50 % auf. Die gemessene Kurve zeigt jedoch, daß die Absorption der 400 µm dicken Siliziumfolie über den gesamten vermessenen Spektralbereich sehr gleichmäßig ist und keine Banden oder Oszillationen aufweist. Die obere Kurve, die aufgrund einer Messung an einer 100 µm dicken Siliziumfolie erhalten wurde, weist hingegen starke Oszillationen auf. Bereits durch minimale Dickenänderungen der Folie verschieben sich die Oszillationen in ihrer Lage, so daß eine praktikable Verwendung von Siliziumfolie einer Dicke um 100 µm zur Infrarotspektroskopie nicht möglich ist.

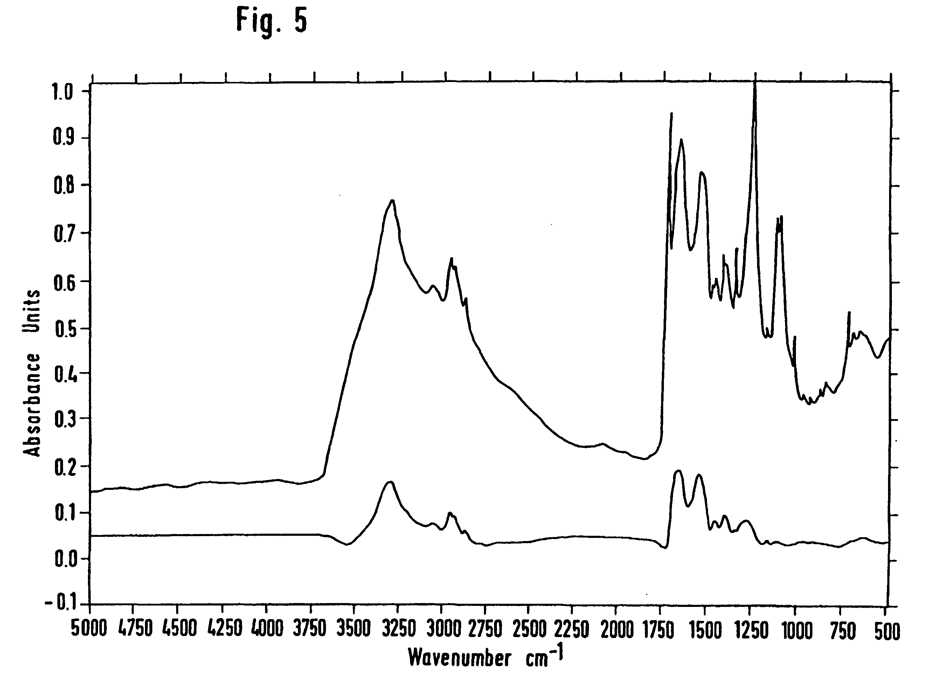

Figur 5 zeigt das Spektrum von Rinderserumalbumin (RSA) in physiologischer Kochsalzlösung. Auf der Ordinate ist die Absorbance und auf der Abzisse sind die Wellenzahlen aufgetragen. Die Messung wurde auf einer 400 nm dicken Mylar®-Folie durchgeführt. Die darunter liegende Kurve zeigt die Standardabweichungskurve des Spektrums, die mit 13 Einzelmessungen bestimmt wurde.

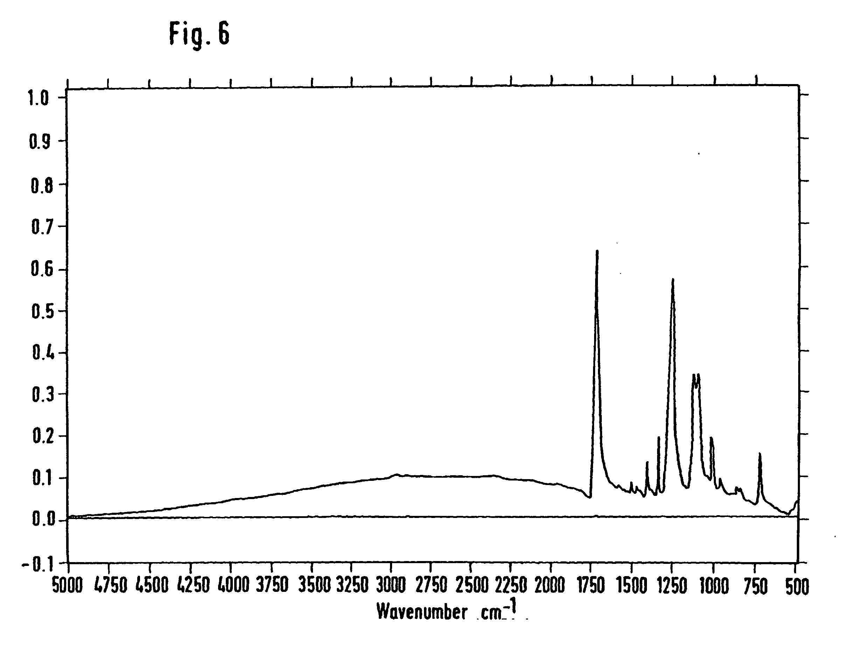

Figur 6 zeigt ein IR-Transmissionsspektrum eines 400 nm dicken Mylar®-Filmes ohne Probe. Die darunter liegende Kurve stellt ein Standardabweichungsspektrum aus 13 Einzelmessungen dar. Aus diesem Standardabweichungsspektrum ist zu erkennen, daß die in Figur 4 gezeigte Oszillation der Absorbance für 100 nm dicke Probenträger nicht vorhanden ist.

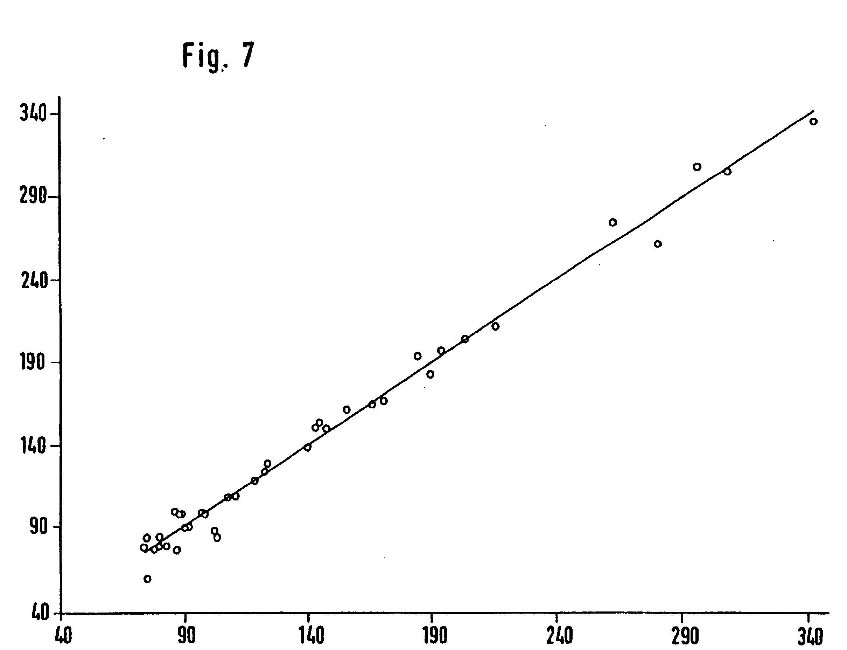

Figur 7 zeigt die Ergebnisse einer quantitativen Bestimmung von Glukose in Wasser mittels einer Infrarotspektroskopie auf einem 400 nm Mylar®-Film. Auf der Abzisse von Figur 7 ist die Einwaage an Glukose in mg/dl Wasser aufgetragen, während auf der Ordinate der mittels Infrarotspektroskopie gefundene Wert abgetragen ist. Die Infrarotspektroskopie wurde im Bereich zwischen 975 und 1200 cm⁻¹ durchgeführt und die Konzentration aufgrund der Absorbance in diesem Bereich ermittelt. Die Lage der in Figur 7 eingezeichneten Punkte um die Winkelhalbierende herum zeigt, daß bei Verwendung erfindungsgemäßer Probenträger eine quantitative Glukosebestimmung möglich ist.

## Patentansprüche

1. Probenträger für die IR-Transmissionsspektroskopie mit Infrarotstrahlung aus einem geeigneten Wellenlängenbereich, der eine Probenaufgabezone (6, 11, 12, 15) sowie einen Halter (1, 10) zur Halterung der Probenaufgabezone besitzt, **dadurch gekennzeichnet, dass** die Probenaufgabezone eine Schichtdicke besitzt die kleiner als 1000 nm ist.

2. Probenträger gemäß Anspruch 1, bei dem die Schichtdicke kleiner als 500 nm, bevorzugt kleiner als 200 nm, ist.

3. Probenträger gemäß Anspruch 1 oder 2, bei dem die Probenaufgabezone aus einem Material aus der Gruppe Silizium, Germanium, Zinkselenid und Diamant besteht.

4. Probenträger gemäß Anspruch 3, der erhalten wurde, indem eine Platte der genannten Materialien einem Ätzprozeß unterworfen wurde, so daß die Dicke der Platte in einem Bereich auf weniger als 1000 nm reduziert wurde und dieser Bereich die Probenaufgabezone bildet, während die Platte außerhalb der Probenaufgabezone den Halter des Probenträgers bildet.

5. Probenträger gemäß Anspruch 1 oder 2, bei dem die Probenaufgabezone eine Folie aus einem Kunststoff oder einem Gemisch von Kunststoffen ist.

6. Probenträger gemäß Anspruch 5, bei dem der Kunststoff ein Polyester ist.

7. Probenträger gemäß Anspruch 1 oder 2, der mehrere gleichartige Probenaufgabezonen besitzt.

8. Verwendung eines Probenträgers gemäß Anspruch 1 zur Durchführung einer quantitativen IR-Transmissionsspektroskopie, der eine Probenaufgabezone (6, 11, 12, 15) sowie einen Halter (1, 10) zur Halterung der Probenaufgabezone besitzt, **dadurch gekennzeichnet, dass** die Probenaufgabezone die Form einer Folie oder dünnen Platte aus einem für Infrarotstrahlung durchlässigen Material besitzt und der vierte Teil der kürztesten Wellenlänge des verwendeten Wellenlängenbereichs im Material der Probenaufgabezone größer ist als die Schichtdicke der Probenaufgabezone.

9. Probenträger für die IR-Transmissionsspektroskopie, der mindestens zwei Probenaufgabezonen (11, 12) sowie einen gemeinsamen Halter (10) zur Halterung der Probenaufgabezonen besitzt, **dadurch gekennzeichnet, dass** die mindestens zwei Probenaufgabezonen aus unterschiedlichen Materialien bestehen, so daß die Probenaufgabezonen keine überlappenden Absorptionsbanden mit einer Absorbance größer als 0,1 im Infrarotbereich von 7 bis 13 µm haben.

10. Probenträger gemäß Anspruch 9, bei dem die Absorptionsbanden der Probenaufgabezonen im Infrarotbereich von 7 bis 13 µm eine Absorbance kleiner als 1 aufweisen.

11. Probenträger gemäß Anspruch 9, bei dem der Probenträger zwei Probenaufgabezonen aus Kunststoff besitzt, wobei der erste Kunststoff aus der Gruppe Polyester, Polyvinylchlorid, Polymethylmethacrylat,Polyethylen, Polypropylen, Polystyrol ausgewählt ist und der zweite Kunststoff dem ersten in seiner Konstitution gleicht, Wasserstoffatome des zweiten Kunststoffes jedoch gegen Deuterium ersetzt sind.

12. Probenträger gemäß Anspruch 9, bei dem die mindestens zwei Probenaufgabezonen direkt aneinandergrenzen.

13. Probenträger gemäß Anspruch 1 oder 9, bei dem der Halter mindestens eine Öffnung besitzt und auf dem Rand der mindestens einen Öffnung eine Probenaufgabezone durch Adhäsion, Aufkleben, Aufschmelzen oder Aufpressen befestigt ist.

14. Probenträger gemäß Anspruch 1 oder 9, bei dem der Halter zwei aufeinanderliegende Schichten besitzt, die jeweils eine Öffnung besitzen und die Probenaufgabezone zwischen den Schichten in der Weise eingeschlossen wird, daß die Probenaufgabezone durch die Öffnungen der Schichten zugänglicht ist.

15. Verwendung eines Probenträgers gemäß einem der Ansprüche 9 bis 14 zur Durchführung einer quantitativen IR-Transmissionsspektroskopie.

16. Verfahren zur Durchführung einer quantitativen IR-Transmissionsspektroskopie mit einem Probenträger gemäß Anspruch 1 oder 9 mit den Schritten
a) Aufbringen einer definierten Menge einer Probe auf die Probenaufgabezone des Probenträgers,
b) Durchstrahlung der Probe im wesentlichen senkrecht zur Probenaufgabezone mit einem Infrarotstrahlungsbündel,
c) Detektion von transmittierter Strahlung,
d) Berechnung der in der Probe enthaltenen Menge eines oder mehrerer Analyten aufgrund der detektierten Strahlung und der auf die Probenaufgabezone aufgegebenen Probenmenge.

17. Verfahren gemäß Anspruch 16, bei dem eine flüssige Probe auf die Probenaufgabezone aufgegeben und die Probe vor der Aufnahme des Infrarotspektrums eingetrocknet wird.

18. System zur Durchführung einer quantitativen IR-Transmissionsspektroskopie, beinhaltend
a) ein Infrarotspektrometer mit einer Auswerteeinheit;
b) einen Probenträger gemäß Anspruch 1.

## Claims

1. Sample carrier for use in IR transmission spectroscopy using infrared radiation from a suitable wavelength range that has a sample application zone (6, 11, 12, 15) and a holder (1, 10) for holding the sample application zone, **characterized in that** the sample application zone has a layer thickness which is less than 1000 nm.

2. Sample carrier as claimed in claim 1 in which the layer thickness is less than 500 nm and preferably less than 200 nm.

3. Sample carrier as claimed in claim 1 or 2 in which the sample application zone consists of a material from the group comprising silicon, germanium, zinc selenide and diamond.

4. Sample carrier as claimed in claim 3 that was obtained by subjecting a plate of said materials to an etching process to reduce the thickness of an area of the plate to less than 1000 nm and this area then forms the sample application zone while the plate outside the sample application zone forms the holder of the sample carrier.

5. Sample carrier as claimed in claim 1 or 2 in which the sample application zone is a foil made from a plastic or a combination of plastics.

6. Sample carrier as claimed in claim 5 in which the plastic is a polyester.

7. Sample carrier as claimed in claim 1 or 2 which has a plurality of similar sample application zones.

8. Use of a sample carrier as claimed in claim 1 for performing a quantitative IR transmission spectroscopy which has a sample application zone (6, 11, 12, 15) and a holder (1, 10) for holding the sample application zone, **characterized in that** the sample application zone is in the form of a foil or thin plate made of a material that is permeable to infrared radiation and the layer thickness of the sample application zone is less than one quarter of the shortest wavelength of the wavelength range used in the material of the sample application zone.

9. Sample carrier for IR transmission spectroscopy that has at least two sample application zones (11, 12) and a common holder (10) for holding the sample application zones, **characterized in that** the at least two sample application zones consist of different materials such that the sample application zones do not have any overlapping absorption bands with an absorbance greater than 0.1 in the infrared range of 7 to 13 µm.

10. Sample carrier as claimed in claim 9 in which the absorption bands of the sample application zones have an absorbance of less than 1 in the infrared range of 7 to 13 µm.

11. Sample carrier as claimed in claim 9 in which the sample carrier has two sample application zones made from plastic, wherein the first plastic is selected from the group comprising polyester, polyvinyl chloride, polymethylmethacrylate, polyethylene, polypropylene and polystyrene and the composition of the second plastic resembles that of the first except that the hydrogen atoms of the second plastic are replaced by deuterium.

12. Sample carrier as claimed in claim 9 in which the at least two sample application zones directly abut each other.

13. Sample carrier as claimed in claim 1 or 9 in which the holder has at least one opening and a sample application zone is attached to the edge of the at least one opening by means of adhesion, gluing, melting or pressing.

14. Sample carrier as claimed in claim 1 or 9 in which the holder has two layers one on top of the other, each of which has an opening and in which the sample application zone is enclosed between the layers in such a manner that the sample application zone is accessible through the openings in the layers.

15. Use of a sample carrier as claimed in one of the claims 9 to 14 for performing a quantitative IR transmission spectroscopy.

16. Method for performing a quantitative IR transmission spectroscopy using a sample carrier as claimed in claim 1 or 9 which comprises the following steps:
a) applying a defined quantity of a sample to the sample application zone of the sample carrier,
b) irradiating the sample with a beam of infrared radiation essentially perpendicular to the sample application zone,
c) detecting the transmitted radiation,
d) calculating the quantity of one or more analytes present in the sample based on the detected radiation and on the quantity of sample applied to the sample application zone.

17. Method as claimed in claim 16 in which a liquid sample is applied to the sample application zone and the sample is dried before the infrared spectrum is recorded.

18. System for performing a quantitative IR transmission spectroscopy which comprises
a) an infrared spectrometer with an evaluation unit;
b) a sample carrier as claimed in claim 1.

## Revendications

1. Porte-échantillon pour la spectroscopie par transmission infrarouge avec un rayonnement infrarouge provenant d'une plage de longueurs d'ondes appropriée, lequel possède une zone (6, 11, 12, 15) pour le chargement d'un échantillon ainsi qu'un support (1, 10) pour la fixation de la zone pour le chargement d'un échantillon, **caractérisé en ce que** la zone pour le chargement d'un échantillon possède une épaisseur de couche inférieure à 1000 nm.

2. Porte-échantillon selon la revendication 1, dans lequel l'épaisseur de couche est inférieure à 500 nm, et est de préférence inférieure à 200 nm.

3. Porte-échantillon selon la revendication 1 ou 2, dans lequel la zone pour le chargement d'un échantillon est composée d'une matière du groupe du silicium, du germanium, du séléniure de zinc et du diamant.

4. Porte-échantillon selon la revendication 3, obtenu du fait qu'une plaque composée des matières susvisées a été soumise à un processus de corrosion de sorte que l'épaisseur de la plaque a été réduite à moins de 1000 nm sur une partie et que cette partie constitue la zone pour le chargement d'un échantillon tandis qu'en dehors de la zone pour le chargement d'un échantillon la plaque constitue le support du porte-échantillon.

5. Porte-échantillon selon la revendication 1 ou 2, dans lequel la zone pour le chargement d'un échantillon est un film en matière synthétique ou en un mélange de matières synthétiques.

6. Porte-échantillon selon la revendication 5, dans lequel la matière synthétique est un polyester.

7. Porte-échantillon selon la revendication 1 ou 2, lequel possède plusieurs zones similaires pour le chargement d'échantillons.

8. Utilisation d'un porte-échantillon selon la revendication 1 pour la réalisation d'une spectroscopie quantitative par transmission infrarouge, lequel possède une zone (6, 11, 12, 15) pour le chargement d'un échantillon ainsi qu'un support (1, 10) pour la fixation de la zone pour le chargement d'un échantillon, **caractérisée en ce que** la zone pour le chargement d'un échantillon a la forme d'un film ou d'une plaque mince composés d'une matière perméable au rayonnement infrarouge et **en ce que** la quatrième partie de la plus courte longueur d'onde de la plage de longueurs d'ondes utilisée est supérieure, dans la matière dont est composée la zone pour le chargement d'un échantillon, à l'épaisseur de couche de la zone pour le chargement d'un échantillon.

9. Porte-échantillon pour la spectroscopie par transmission infrarouge, lequel possède au moins deux zones (11, 12) pour le chargement d'échantillons ainsi qu'un support commun (10) pour la fixation des zones pour le chargement d'échantillons, **caractérisé en ce que** les au moins deux zones pour le chargement d'échantillons sont composées de matières différentes de sorte que, dans la plage infrarouge comprise entre 7 et 13 µm, les zones pour le chargement d'échantillons n'ont pas de bandes d'absorption présentant une absorbance supérieure à 0,1 qui se chevauchent.

10. Porte-échantillon selon la revendication 9, dans lequel les bandes d'absorptions des zones pour le chargement d'échantillons présentent une absorbance inférieure à 1 dans la plage infrarouge comprise entre 7 et 13 µm.

11. Porte-échantillon selon la revendication 9, dans lequel le porte-échantillon possède deux zones en matière synthétique pour le chargement d'échantillons, la première matière synthétique étant choisie dans le groupe du polyester, du chlorure de polyvinyle, du polyméthacrylate de méthyle, du polyéthylène, du polypropylène et du polystyrène et la deuxième matière synthétique étant de même conformation que la première, les atomes d'hydrogène de la deuxième matière synthétique étant toutefois remplacés par du deutérium.

12. Porte-échantillon selon la revendication 9, dans lequel les au moins deux zones pour le chargement d'échantillons sont directement adjacentes.

13. Porte-échantillon selon la revendication 1 ou 9, dans lequel le support possède au moins une ouverture et une zone pour le chargement d'un échantillon est fixée sur le bord de l'au moins une ouverture par adhésion, par collage, par assemblage par fusion ou par pression.

14. Porte-échantillon selon la revendication 1 ou 9, dans lequel le support possède deux couches superposées possédant respectivement une ouverture et dans lequel la zone pour le chargement d'un échantillon est enfermée entre les couches de manière telle que la zone pour le chargement d'un échantillon est accessible par les ouvertures des couches.

15. Utilisation d'un porte-échantillon selon l'une des revendications 9 à 14 pour la réalisation d'une spectroscopie quantitative par transmission infrarouge.

16. Procédé pour la réalisation d'une spectroscopie quantitative par transmission infrarouge avec un porte-échantillon selon la revendication 1 ou 9, comprenant les étapes suivantes:
a) application d'une quantité définie d'un échantillon sur la zone de chargement d'un échantillon du porte-échantillon;
b) irradiation de l'échantillon de manière sensiblement verticale par rapport à la zone de chargement de l'échantillon avec un faisceau de rayons infrarouges;
c) détection de rayonnement transmis;
d) calcul de la quantité d'un ou de plusieurs analytes contenue dans l'échantillon sur la base du rayonnement détecté et de la quantité d'échantillon déposé sur la zone de chargement de l'échantillon.

17. Procédé selon la revendication 16, dans lequel un échantillon liquide est déposé sur la zone de chargement de l'échantillon et l'échantillon est desséché avant la prise du spectre infrarouge.

18. Système pour la réalisation d'une spectroscopie quantitative par transmission infrarouge, comprenant
a) un spectromètre infrarouge avec une unité d'évaluation,
b) un porte-échantillon selon la revendication 1.
